# FASCICULE DE BREVET EUROPEEN

(11) **EP 3 918 227 B1**
(45) Date de publication et mention de la délivrance du brevet: **07.06.2023**
(21) Numéro de dépôt: 20701637.9
(22) Date de dépôt: 30.01.2020
(51) Int. Cl.: F16F 15/14

(54) **DISPOSITIF D'AMORTISSEMENT PENDULAIRE**
PENDELARTIGE DÄMPFUNGSVORRICHTUNG
PENDULAR DAMPING DEVICE

(30) Priorité: 31.01.2019 FR 1900972
(43) Date de publication de la demande: 08.12.2021
(73) Titulaire: VALEO EMBRAYAGES, 80009 Amiens (FR)
(72) Inventeur: NERRIERE, Adrien, 95892 CERGY PONTOISE (FR); COUVILLERS, Didier, 95892 CERGY PONTOISE (FR); FAFET, Olivier, 95892 CERGY PONTOISE (FR); VIGREUX, Antoine, 95892 CERGY PONTOISE (FR); MALLEY, Matthieu, 95892 CERGY PONTOISE (FR)
(74) Mandataire: Valeo Powertrain Systems
(86) Numéro de dépôt international: PCT/EP2020/052230
(87) Numéro de publication internationale: WO 2020/157169

(56) Documents cités:
- WO-A1-2016/146394
- WO-A1-2017/167329
- DE-A1-102017 113 054
- FR-A1- 3 047 784

## Description

La présente invention se rapporte à un dispositif d'amortissement pendulaire, notamment pour un embrayage d'un système de transmission de véhicule automobile.

Un dispositif d'amortissement pendulaire est classiquement utilisé pour filtrer les vibrations dues aux acyclismes du moteur d'un véhicule automobile. En effet, les mouvements des cylindres d'un moteur à explosion génèrent des acyclismes qui varient notamment en fonction du nombre de cylindres. Ces acyclismes sont susceptibles de générer à leur tour des vibrations qui peuvent passer dans la boîte de vitesses et y provoquer des chocs et des nuisances sonores indésirables. Il est donc préférable de prévoir un dispositif de filtration des vibrations.

Le dispositif d'amortissement pendulaire est classiquement fixé rigidement, au moyen de rivets, à une rondelle de phasage d'un dispositif d'amortissement de torsion, en particulier à un embrayage, un volant solidaire d'un vilebrequin, un convertisseur de couple hydrodynamique ou un double embrayage à sec ou humide. Un tel dispositif d'amortissement de torsion est par exemple connu sous le nom de double volant amortisseur.

En variante, dans une telle application, le dispositif d'amortissement peut être intégré à un disque de friction de l'embrayage.

Classiquement, le dispositif d'amortissement pendulaire comporte un support annulaire destiné à être entraîné en rotation et plusieurs corps pendulaires, montés oscillants sur le support autour d'un axe parallèle à l'axe de rotation du support. Le déplacement d'un corps pendulaire par rapport au support est généralement guidé par deux organes de roulement coopérant chacun avec une piste de roulement du support et une piste de roulement de corps pendulaire. Les pistes de roulement du support et de corps pendulaire s'étendent de manière à ce qu'en service les organes de roulement soient en appui centrifuge et centripète, respectivement, sur lesdites pistes.

Un corps pendulaire est classiquement constitué par une paire de masses oscillantes, prenant en sandwich le support et rigidement solidaires entre elles, généralement par l'intermédiaire d'un organe de liaison. Les masses oscillantes peuvent être rivetées sur l'organe de liaison ou elles peuvent comporter des fenêtres dans lesquelles s'étend l'organe de liaison.

Un dispositif d'amortissement pendulaire est connu de la demande DE 10 2014 208 126. Pour amortir la venue en position de butée d'un corps pendulaire contre le support, et éviter ainsi les bruits et l'usure associés à cette venue en position de butée, cette demande enseigne de munir chaque rivet reliant les deux masses pendulaires de ce corps pendulaire d'élastomère, cet élastomère s'interposant alors entre le rivet et le support lors d'une telle venue en position de butée.

Cet élastomère peut ne pas amortir suffisamment les chocs entre corps pendulaire et support.

Il existe un besoin pour améliorer l'amortissement des chocs entre le support et des corps pendulaires.

Un autre dispositif d'amortissement pendulaire est connu du document DE 10 2017 113054 A1, qui divulgue le préambule de la revendication 1 et est considéré comme représentant l'art antérieur le plus proche.

A cet effet, l'invention propose un dispositif d'amortissement pendulaire destiné à être intégré dans une chaîne de transmission d'un véhicule automobile, notamment dans un embrayage, comprenant : un support mobile en rotation autour d'un axe de rotation, un corps pendulaire dont le déplacement par rapport au support est guidé par au moins un organe de roulement, et un système d'amortissement de butée directement porté par le corps pendulaire et permettant au moins d'amortir la venue en position de butée contre le support dudit corps pendulaire lors de la chute radiale et/ou de la saturation de ce dernier, caractérisé en ce que le corps pendulaire comprend au moins une excroissance radiale adaptée pour passer au moins partiellement au travers une ouverture pratiquée dans le système d'amortissement de butée.

Une telle chute radiale se produit par exemple lors de l'arrêt du moteur thermique du véhicule.

La saturation se produit lorsqu'un corps pendulaire se déplace tangentiellement au maximum de sa capacité. Les phases de saturation du corps pendulaire se produisent lorsque le corps pendulaire se situe sur la fin de ses traces de déplacement.

L'excroissance radiale peut être considéré comment un bossage. L'excroissance radiale fait saillie radialement depuis le corps pendulaire.

Ainsi et comme on le verra plus en détail dans la suite de la description, le système d'amortissement de butée permet de réduire la hauteur de la chute radiale du corps pendulaire, notamment lors d'un arrêt du moteur thermique du véhicule. Les bruits et les chocs associés à cette chute radiale sont alors réduits.

La présence de l'excroissance radiale passant au moins partiellement au travers de l'ouverture du système d'amortissement de butée permet d'obtenir un contact direct entre le corps pendulaire et le support après un niveau prédéterminé de compression radiale de l'élément d'amortissement de butée. Ce contact permet de limiter les risques de pertes et/ou de coincement de l'organe de roulement lors de l'oscillation du corps pendulaire, notamment en cas de perte ou de rupture du système d'amortissement de butée. En outre, ce contact permet de limiter la compression du système d'amortissement de butée et donc d'en augmenter la durée de vie.

En outre, le fait que le système d'amortissement de butée soit directement porté par le corps pendulaire permet d'obtenir un système présentant un volume important afin d'optimiser l'absorption des chocs tout diminuant le coût d'un tel système.

Un dispositif selon l'invention peut encore comporter une ou plusieurs des caractéristiques optionnelles suivantes :
Le corps pendulaire est métallique et le système d'amortissement de butée est en un matériau élastique tel que l'élastomère ; ainsi le système d'amortissement de butée est adapté pour amortir les chocs ; ainsi, le contact métal/métal entre le corps pendulaire et le support permet de réduire les contraintes exercées sur le système d'amortissement de butée lors des compressions et d'augmenter la durée de vie dudit système ;
Le dispositif comprend une ligne fictive s'étendant circonférentiellement entre une première extrémité circonférentielle et une deuxième extrémité circonférentielle du système d'amortissement de butée, ladite ligne fictive traversant au moins une couche métallique et au moins une couche en élastomère ;
L'excroissance s'étend radialement entre une première extrémité rigidement solidaire du corps pendulaire et une deuxième extrémité libre, et dans lequel, lorsque le corps pendulaire est dans une position de repos, ladite extrémité libre est à une distance non nulle d'un bord inférieur du système d'amortissement de butée ; la distance peut être de 1 millimètre +/- 20% ;
La distance radiale entre l'extrémité libre et le support est inférieure au diamètre de l'organe de roulement ; cela est vrai quel que soit la position du corps pendulaire ; ainsi, la distance maximale de chute radiale du corps pendulaire est limitée et le risque de perte et/ou de coincement des organes de roulement est limité ;
La distance entre la deuxième extrémité libre de l'excroissance et le bord inférieur du système d'amortissement de butée est radiale ;
lorsque le corps pendulaire est dans la position de repos, le bord inférieur du système d'amortissement de butée est radialement plus proche de l'axe de rotation que ladite deuxième extrémité libre ;
la distance entre la première extrémité et la deuxième extrémité libre de l'au moins une excroissance radiale est prédéterminée de sorte que la distance radiale entre ladite deuxième extrémité libre et le support soit toujours inférieure au diamètre de l'au moins un organe de roulement ; ainsi, le risque de perte et/ou de coincement de l'organe de roulement est limité ;
le corps pendulaire comprend deux excroissances radiales et le système d'amortissement de butée comprend deux ouvertures, chacune des ouvertures étant optionnellement située à l'une des extrémités circonférentielles dudit système d'amortissement de butée ;
le système d'amortissement de butée comprend une unique ouverture, ladite unique ouverture étant optionnellement centrée circonférentiellement sur ledit système d'amortissement de butée ;
le corps pendulaire comprend deux masses oscillantes appariées entre elles par au moins un organe de liaison, le système d'amortissement de butée étant porté par l'au moins un organe de liaison ou par au moins une des masses oscillantes ;
l'au moins un organe de liaison passe au travers d'une fenêtre ménagée dans le support ;
le contact entre le support et le système d'amortissement de butée en cas de chute radiale et/ou de saturation du corps pendulaire se fait entre une partie radialement interne de la fenêtre et un bord inférieur dudit système d'amortissement de butée lorsque le système d'amortissement de butée est porté par l'au moins un organe de liaison ;
la partie radialement interne de la fenêtre présente un rayon de courbure identique, par exemple à +/-2%, au rayon de courbure du bord inférieur du système d'amortissement de butée ; Cette corrélation de rayon de courbure permet d'assurer une compression uniforme du système d'amortissement de butée ;
le bord inférieur du système d'amortissement de butée présente un rayon de courbure identique, par exemple à +/-2%, au rayon de courbure de la face inférieure de l'au moins un organe de liaison ou au rayon de courbure du bord radialement interne d'une des masses oscillantes ; Cette corrélation de rayon de courbure permet d'assurer une compression uniforme du système d'amortissement de butée ;
le système d'amortissement de butée s'étend entre les deux extrémités circonférentielles de l'au moins un organe de liaison ou d'au moins une des masses oscillantes ; plus la longueur, dans la direction circonférentielle, du système d'amortissement de butée est importante plus ledit système est efficace dans l'absorption des différents chocs entre le corps pendulaire et le support ;
la distance entre les deux extrémités circonférentielles du système d'amortissement de butée est égale, à +/-15%, à la distance entre les deux extrémités circonférentielles de l'au moins un organe de liaison ou de l'une des masses oscillantes ; Cette longueur circonférentielle sensiblement égale permet d'assurer un recouvrement optimale de la face inférieure de l'organe de liaison ou du bord radialement intérieur de la masse oscillante compris entre 85 et 115% ; lorsque le pourcentage de recouvrement dépasse les 100%, le système d'amortissement de butée recouvre également les extrémités circonférentielles de l'organe de liaison ou de la masse oscillante ;
l'au moins un organe de liaison est riveté aux masses oscillantes ; la solution est particulièrement efficace pour les organes de liaison riveté car ces liaison riveté consomme beaucoup de place ;
le système d'amortissement de butée est directement porté par l'au moins un organe de liaison ou par au moins une des masses oscillantes ; l'absence de pièce intermédiaire permet de réduire les coûts de fabrication ;
le système d'amortissement de butée est radialement plus proche de l'axe de rotation du support que l'au moins un organe de liaison ou que l'au moins une des masses oscillantes ;
le corps pendulaire comprend deux organes de roulement, les deux organes de roulement roulant sur un unique organe de liaison ;
le corps pendulaire comprend deux organes de roulement, chacun des deux organes de roulement roulant sur un organe de liaison ;
le système d'amortissement de butée comprend au moins une patte de fixation s'étendant radialement dans un jeu axial ménagé entre au moins une des masses oscillantes et l'au moins un organe de liaison ; cette patte de fixation permet d'absorber les chocs axiaux entre l'organe de liaison et la masse oscillante et elle permet d'améliorer la fixation du système d'amortissement de butée au corps pendulaire tout en optimisant l'encombrement de celui-ci ;
l'au moins une patte de fixation est décalée circonférentiellement de l'ouverture ; ainsi, les contraintes dans le système d'amortissement de butée sont réduites et la durée de vie dudit système est augmentée ;
l'une des extrémités de l'au moins une patte de fixation comprend un crochet, ledit crochet étant adapté pour s'enficher axialement dans un trou ménagé dans l'une des masses oscillantes ou dans l'au moins un organe de liaison ;
le crochet s'étend radialement par rapport à ladite patte de fixation ; c'est-à-dire que le crochet s'étend selon une direction parallèle à l'axe de rotation du support ; le crochet permet de renforcer la liaison entre le système d'amortissement de butée et l'organe de liaison ou la masse oscillante ;
le système d'amortissement de butée comprend au moins deux pattes de fixation, lesdites pattes de fixation étant symétriques entre elles par rapport à un plan perpendiculaire à l'axe de rotation ; ainsi, la rigidité globale du système d'amortissement de butée est augmentée et le système d'amortissement de butée est plus facile à manipuler par les opérateurs lors des opérations de montage ;
le système d'amortissement de butée comprend au moins quatre pattes de fixation, lesdites pattes de fixation étant symétriques par rapport à un plan perpendiculaire à l'axe de rotation et par rapport à un plan parallèle à l'axe de rotation ; ainsi, la rigidité globale du système d'amortissement de butée est augmentée et le système d'amortissement de butée est plus facile à manipuler par les opérateurs lors des opérations de montage ;
l'au moins une patte de fixation comprend un bossage s'étendant radialement par rapport à ladite patte de fixation ; radialement par rapport à ladite patte de fixation signifie selon une direction parallèle à l'axe de rotation du support ; le maintien de la patte de fixation par compression axiale permet d'uniformiser la fabrication des pièces constituant le corps pendulaire ;
le bossage est compris par l'une des extrémités de l'au moins une patte de fixation ;
le corps pendulaire comprend en outre une plaque métallique, le système d'amortissement de butée étant surmoulé ou collé à ladite plaque ; l'insertion d'une plaque métallique permet de faciliter le montage du système d'amortissement de butée sur ledit corps pendulaire ;
la plaque métallique est rigidement solidaire d'au moins une des masses oscillantes ou de l'au moins un organe de liaison ;
la première extrémité de l'excroissance radiale du corps pendulaire est rigidement solidaire de l'organe de liaison ;
la première extrémité de l'excroissance radiale du corps pendulaire est rigidement solidaire d'au moins une des masses oscillantes ;
la première extrémité de l'excroissance radiale du corps pendulaire est rigidement solidaire de la plaque métallique ;
L'invention a encore pour objet un composant pour système de transmission d'un véhicule automobile, le composant étant notamment un double volant amortisseur, un convertisseur de couple hydrodynamique un volant solidaire du vilebrequin ou un disque de friction d'embrayage à sec ou humide, comprenant un dispositif d'amortissement pendulaire selon l'invention.

L'invention a enfin pour objet, selon un autre de ses aspects, un groupe motopropulseur de véhicule comprenant : un moteur thermique de propulsion du véhicule, et un composant pour système de transmission selon l'invention.

D'autres caractéristiques et avantages de l'invention apparaîtront encore à la lecture de la description qui va suivre et à l'examen du dessin annexé dans lequel :
[Fig. 1] représente une vue partielle coupée de face d'un dispositif d'amortissement pendulaire selon l'invention en position de repos,
[Fig. 2] représente une vue isolée en perspective du système d'amortissement de butée,
[Fig. 3] est une vue en coupe axiale du dispositif d'amortissement pendulaire de la [Fig. 1],
[Fig. 4] est une vue similaire à la [Fig. 3] mais avec une première variante de réalisation du système d'amortissement de butée,
[Fig. 5] est une vue partielle de face du dispositif d'amortissement pendulaire comprenant une deuxième variante de réalisation du système d'amortissement de butée,
[Fig. 6] est une vue en coupe axiale du dispositif de la [Fig. 5],
[Fig. 7] est une vue de face d'une venue en butée d'un corps pendulaire contre le support à l'issue d'un déplacement dans le sens trigonométrique dudit corps pendulaire depuis la position de repos,
[Fig. 8] est une vue partielle de face d'un corps pendulaire comprenant deux organes de liaison et d'une variante du système d'amortissement de butée associé,
[Fig. 9] est une vue partielle de face d'un corps pendulaire comprenant deux organes de liaison et d'une deuxième variante du système d'amortissement de butée associé,
[Fig. 10] est une vue partielle de face dans laquelle le corps pendulaire comprend en outre une plaque métallique,
[Fig. 11] est une vue en coupe axiale du dispositif de la [Fig. 10],
[Fig. 12] est une vue en coupe axiale du dispositif de la [Fig. 10] représentant une première variante de réalisation de la plaque métallique,
[Fig. 13] est une vue en coupe axiale du dispositif de la [Fig. 10] représentant une deuxième variante de réalisation de la plaque métallique,

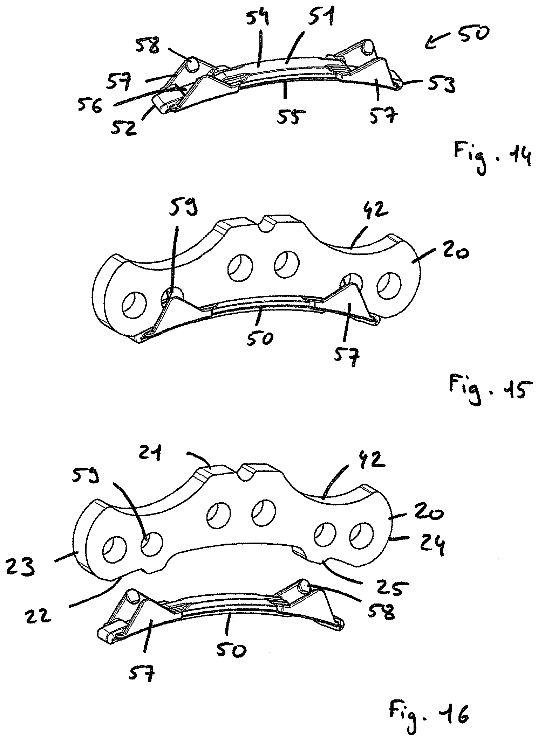

[Fig. 14] représente une vue isolée en perspective du système d'amortissement de butée selon une troisième variante,
[Fig. 15] et [Fig. 16] sont des vues du système d'amortissement de butée selon une troisième variante et de l'organe de liaison associé.

Sur les différentes figures, des références identiques sont utilisées pour désigner des organes identiques ou analogues.

Sauf indication contraire, « axialement » signifie « parallèlement à l'axe de rotation X du support » ; « radialement » signifie « selon un axe transversal coupant l'axe de rotation du support » ; « angulairement » ou « circonférentiellement » signifient « autour de l'axe de rotation du support ».

L'épaisseur est mesurée selon l'axe de rotation X.

Par « appui centrifuge », on entend une force d'appui comportant une composante orientée à l'écart de l'axe de rotation X.

Par « véhicule automobile », on entend non seulement les véhicules passagers, mais également les véhicules industriels, ce qui comprend notamment les poids lourds, les véhicules de transport en commun ou les véhicules agricoles.

Par « corps pendulaire », on entend une masse oscillante qui est montée de manière à osciller sur le support en réponse aux acyclismes du moteur du véhicule. Un corps pendulaire est classiquement constitué par une paire de masses oscillantes, ou « masses pendulaires », s'étendant de manière à prendre en sandwich le support et rigidement solidaires entre elles. Un corps pendulaire comprend en outre au moins un organe de liaison, encore appelé entretoise, adapté pour appairer entre elles la paire de masses oscillantes. Un corps pendulaire peut être également constitué par une masse oscillante unique. La masse oscillante unique peut être prise en sandwich entre deux supports.

Par « freinage », on entend l'action d'un frottement s'opposant à un mouvement sans le bloquer complètement.

Deux pièces sont dites « rigidement solidaires » ou « appariées » lorsqu'elles sont en permanence immobilisées l'une par rapport à l'autre. Cette immobilisation peut résulter d'une fixation de la première pièce sur la deuxième pièce directement ou par l'intermédiaire d'une ou plusieurs pièces intermédiaires.

La position de repos du dispositif est celle dans laquelle les corps pendulaires sont soumis à une force centrifuge, mais non à des oscillations de torsion provenant des acyclismes du moteur thermique.

Les corps pendulaires sont dits « supportés par la force centrifuge » lorsque la vitesse de rotation du support est suffisante pour maintenir les corps pendulaires plaqués radialement vers l'extérieur contre les organes de roulement, et par leur intermédiaire contre le support.

Sauf indication contraire, les verbes « comporter », « présenter » ou « comprendre » doivent être interprétés de manière large, c'est-à-dire non limitative.

Comme représenté sur les figures, un dispositif 10 d'amortissement pendulaire, notamment apte à équiper un système de transmission de véhicule automobile, est par exemple intégré à un composant d'un tel système de transmission, ce composant étant par exemple un double volant amortisseur.

Ce composant peut faire partie d'un groupe motopropulseur d'un véhicule automobile, ce dernier pouvant comprendre un moteur thermique ayant un nombre prédéterminé de cylindres, par exemple trois, quatre ou six cylindres.

Le dispositif 10 d'amortissement pendulaire comporte au moins un corps pendulaire 13 monté sur un support 12. Le dispositif 10 comprend de préférence une pluralité de corps pendulaires 13 montés sur le support 12. Chaque corps pendulaire comprend au moins une masse oscillante 14.

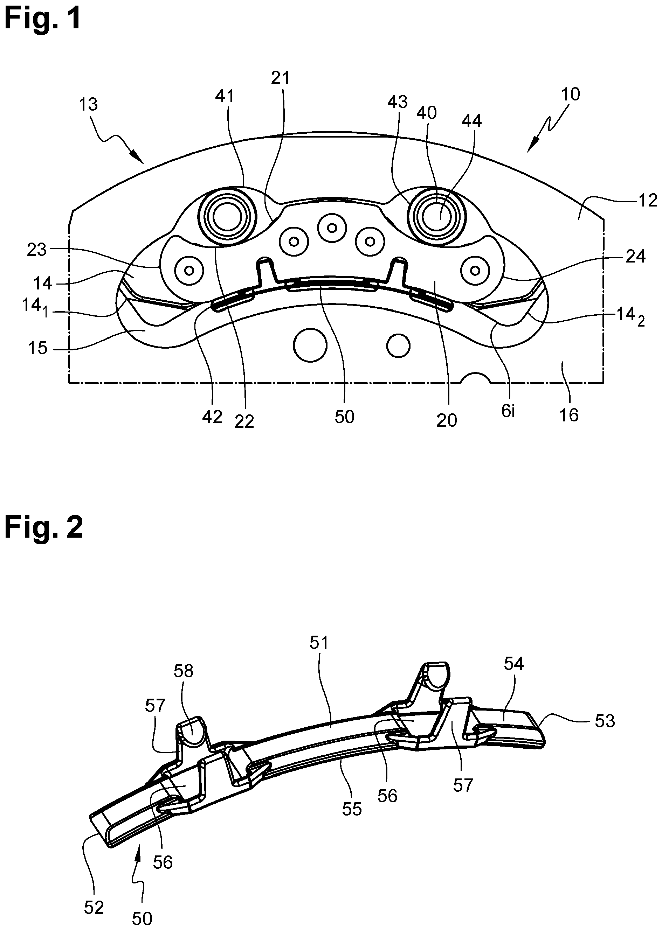

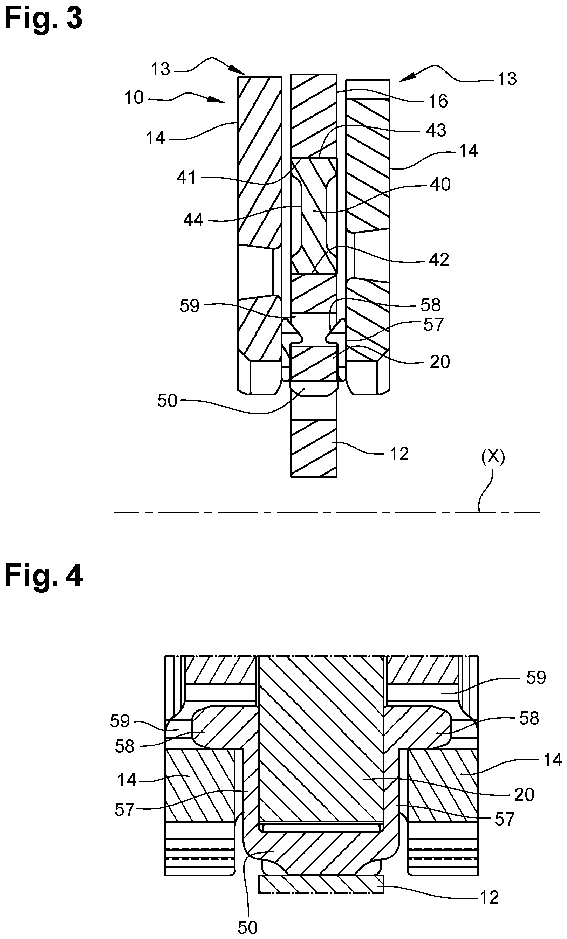

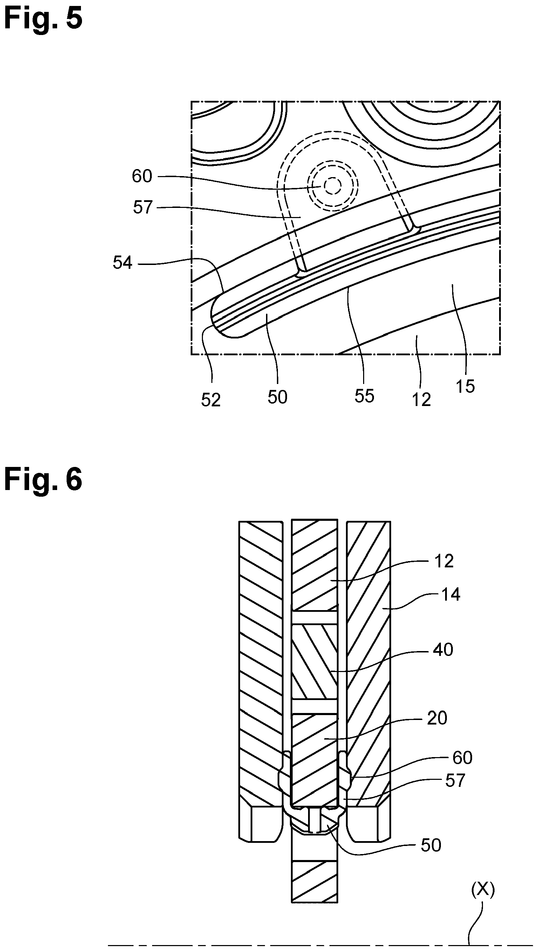

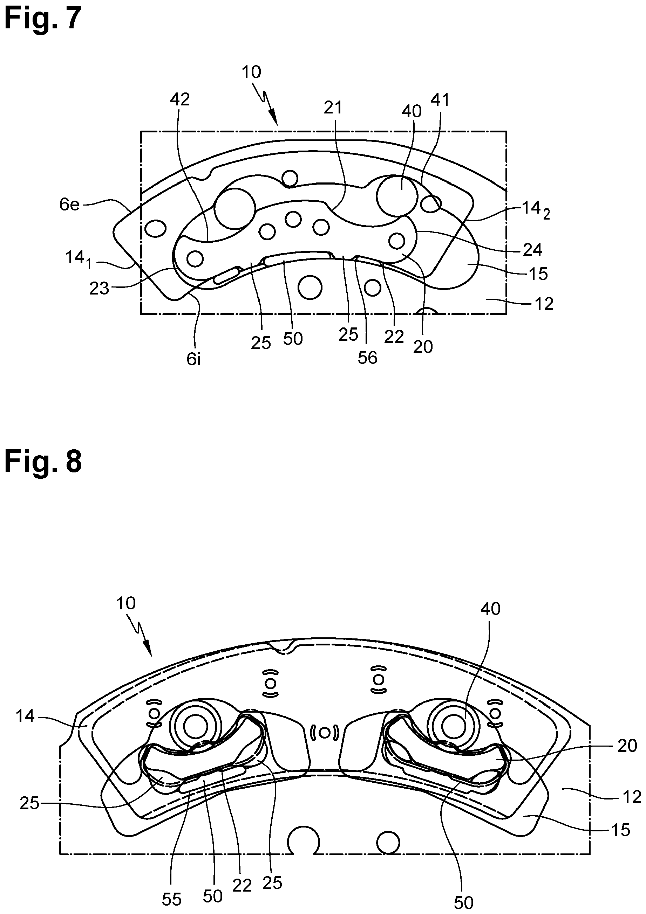

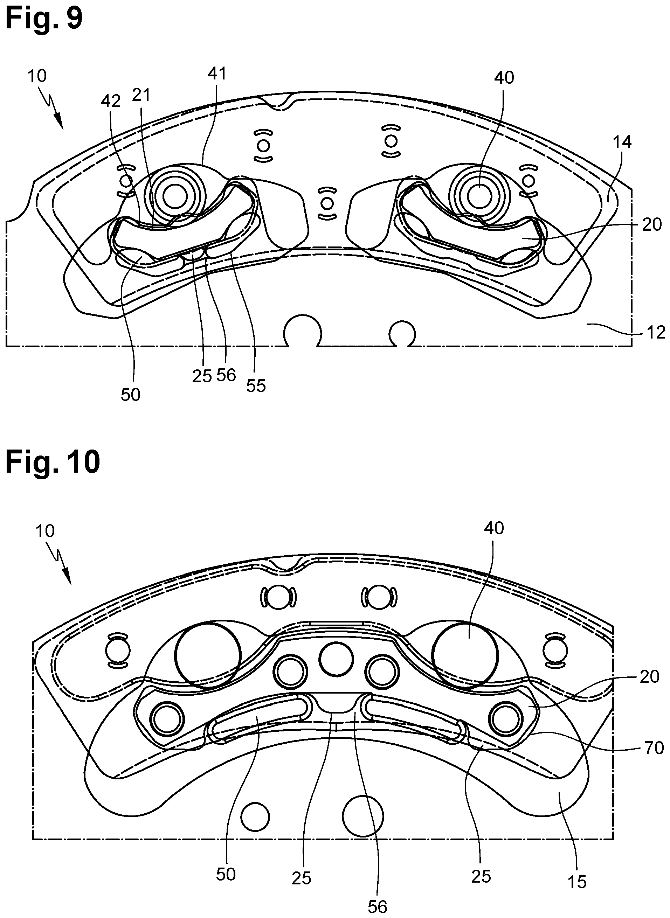

Dans les exemples représentés, chaque corps pendulaire comprend deux masses oscillantes 14 appariées au moyen d'au moins un organe de liaison communément appelé « entretoise » 20. Sur les figures 1 à 7, chaque corps pendulaire 13 comprend une unique entretoise. Sur les figures 8 et 9, chaque corps pendulaire 13 comprend deux entretoises 20.

Chaque entretoise 20 peut être rivetée aux masses oscillante 14 d'un même corps pendulaire 13. Alternativement, chaque entretoise 20 peut être emmanchée en force dans les masses oscillantes 14 d'un même corps pendulaire 13.

Chacune entretoise 20 peut comprendre un corps principal qui s'étend radialement et circonférentiellement, et est de forme générale arquée. Le corps principal s'étend radialement entre une face supérieure 21 radialement externe et une face inférieure 22 radialement interne. Le corps principal s'étend circonférentiellement entre une première extrémité circonférentielle 23 et une deuxième extrémité circonférentielle 24.

Chacune des masses oscillantes 14 comprend un corps principal qui s'étend radialement et circonférentiellement, et est de forme générale arquée. Le corps principal s'étend radialement entre des bords radialement intérieurs 6i et radialement extérieurs 6e de masse oscillante 14. Le corps principal s'étend circonférentiellement entre une première extrémité circonférentielle 141 et une deuxième extrémité circonférentielle 142. Les masses oscillantes 14 sont situées de part et d'autre du support 12 et sont axialement en regard.

Alternativement, chaque corps pendulaire 13 comprend une unique masse oscillante 14 et deux supports 12. Les deux supports 12 sont appariés au moyen d'au moins un organe de liaison tel qu'un rivetage positionné radialement intérieurement par rapport au ou aux corps pendulaires. Les deux supports 12 peuvent être axialement en regard. La masse oscillante 14 est située entre les deux supports 12. Deux capots peuvent alors être positionnés axialement autour de l'ensemble formé par les deux supports et les corps pendulaires. On peut ainsi trouver successivement axialement : l'un des capots, l'un des supports 12, la masse oscillante 14, l'autre des supports 12, et l'autre des capots.

Le support 12 peut être un élément d'entrée de l'amortisseur de torsion, un élément de sortie ou un élément de phasage intermédiaire disposé entre deux séries de ressort de l'amortisseur, ou un élément lié en rotation à un des éléments précités et distinct de ces derniers, étant alors par exemple un support propre au dispositif 10.

Le support 12 du dispositif 10 d'amortissement pendulaire peut alors être l'un parmi une rondelle de guidage du composant, une rondelle de phasage du composant, ou un support distinct dudit voile, de ladite rondelle de guidage et de ladite rondelle de phasage.

Dans le cas où le dispositif est intégré à un volant solidaire du vilebrequin, le support peut être solidaire de ce volant.

Le support 12 peut encore être autre, tel qu'un flasque.

Dans l'exemple considéré, le support 12 présente globalement une forme d'anneau constitué par une tôle métallique découpée, généralement en acier, d'une épaisseur typiquement inférieure à 10 mm (millimètres), de préférence inférieure à 9 mm, de préférence inférieure à 8 mm.

Le support 12 s'étend axialement entre deux faces latérales 16 opposées. Les deux faces latérales 16 peuvent être planes. Les deux faces latérales 16 peuvent s'étendre entre un bord radialement intérieur et un bord radialement extérieur. Le bord radialement intérieur peut être classiquement de forme circulaire.

Au moins une fenêtre 15 traverse le support 12 suivant son épaisseur. De préférence, autant de fenêtres 15 que de corps pendulaire 13 traverse le support 12. Chacune des fenêtres 15 définit un espaces vide à l'intérieur du support 12. Les fenêtres 15 peuvent être régulièrement réparties sur toute la circonférence du support 12. Chaque entretoise 20 peut traverser une fenêtre 15. Chaque entretoise 20 peut être intégralement reçu dans l'épaisseur de la fenêtre 15.

Le dispositif 10 comprend en outre au moins un organe de roulement 40, par exemple un rouleau. Chaque corps pendulaire 13 est classiquement monté oscillant sur le support 12, par exemple au moyen d'un unique organe de roulement 40.

De préférence, chaque corps pendulaire 13 est monté oscillant sur le support 12 au moyen de deux organe de roulement 40. Deux organes de roulement 40 peuvent traverser une unique fenêtre 15 du support 12 et guident le mouvement de la ou des masses oscillantes 14 d'un corps pendulaire 13 par rapport au support 12. Alternativement, chaque organe de roulement 40 peut respectivement traverser une fenêtre 15 du support et guide le mouvement de la ou des masses oscillantes 14 par rapport au support 12.

Chaque organe de roulement 40 peut rouler sur une piste de roulement de support 41, solidaire du support 12 lorsque le corps pendulaire 13 est supporté par la force centrifuge. Chaque organe de roulement 40 peut rouler sur une piste de roulement de corps pendulaire 42, solidaire du corps pendulaire 13, lorsque le corps pendulaire 13 est supporté par la force centrifuge. Les bords des fenêtres 15, en particulier les parties radialement externes desdits bords, peuvent définir les pistes de roulement de support 41. L'entretoise 20 peut former la piste de roulement de corps pendulaire 42 ou les pistes de roulement de corps pendulaire 42 lorsque deux organes de roulement 40 sont dans une même fenêtre 15. Plus particulièrement, la face supérieure 21 radialement externe de l'entretoise 20 peut former la ou les piste(s) de roulement de corps pendulaire 42.

En variante, chaque masse oscillante 14 d'un corps pendulaire 13 peut définir la piste de roulement de corps pendulaire 42 sur laquelle roule l'organe de roulement 40 du dispositif 10 d'amortissement pendulaire pour guider le déplacement du corps pendulaire 13. Chaque organe de roulement 40 peut alors comprendre successivement axialement: une portion disposée dans une ouverture de la première masse oscillante 14 et coopérant avec la piste de roulement de corps pendulaire 42 formée par une partie du contour de cette ouverture, une portion disposée dans la fenêtre 15 du support 12 et coopérant avec une piste de roulement de support 41 formée par une partie du contour de cette fenêtre 15, et une portion disposée dans une ouverture de la deuxième masse oscillante 14 et coopérant avec la piste de roulement de corps pendulaire 42 formée par une partie du contour de cette ouverture.

La forme des pistes de roulement de support 41 et de corps pendulaire 42 peut être telle que chaque corps pendulaire 13 soit déplacé par rapport au support 12 à la fois : en translation autour d'un axe fictif parallèle à l'axe de rotation X du support 12 et, également en rotation autour du centre de gravité dudit corps pendulaire 13, un tel mouvement étant encore appelé « mouvement combiné » et divulgué par exemple dans la demande DE 10 2011 086 532.

En variante, la forme des pistes de roulement de support 41 et de corps pendulaire 42 précitées peut être telle que chaque corps pendulaire 13 soit uniquement déplacé par rapport au support 12 en translation autour d'un axe fictif parallèle à l'axe X de rotation du support 12.

La piste de roulement de corps pendulaire 42 peut présenter une forme concave. C'est-à-dire que la courbure de la piste de roulement de corps pendulaire 42 peut être dans une direction opposée à la courbure de la piste de roulement de support 41.

Chaque organe de roulement 40 peut être monté librement dans une fenêtre 15 du support 12. Chaque organe de roulement 40 peut présenter une surface de roulement 43, adaptée pour être au moins partiellement au contact de la piste de roulement de support 41 et de la piste de roulement de corps pendulaire 42. Chaque organe de roulement 40 peut être un cylindre de rayon constant. Chaque organe de roulement 40 peut être non traversant. Chaque organe de roulement 40 peut être traversant.

Chaque organe de roulement 40 peut être uniquement sollicité en compression entre la piste de roulement de corps pendulaire 42 et la piste de roulement de support 41. La piste de roulement de corps pendulaire 42 et la piste de roulement de support 41 coopérant avec un même organe de roulement 40 peuvent être au moins en partie radialement en regard, c'est-à-dire qu'il existe des plans perpendiculaires à l'axe X de rotation dans lesquels ces pistes de roulement s'étendent toutes les deux.

Chaque organe de roulement 40 peut coopérer avec la piste de roulement de corps pendulaire 42 et avec la piste de roulement de support 41 uniquement via sa surface de roulement 43 extérieure.

Toutes les pistes de roulement de corps pendulaire 42 peuvent avoir exactement la même forme entre elles et/ou toutes les pistes de roulement de support 41 peuvent avoir exactement la même forme entre elles.

L'organe de roulement 40 définit deux faces latérales 44, sensiblement transversales. Les deux faces latérales 44 de l'organe de roulement 40 peuvent s'étendre radialement entre la surface de roulement 43, en regard des masses oscillantes 14. Les deux faces latérales 44 de l'organe de roulement 40 peuvent présenter une forme bombée.

Les corps pendulaires 13 sont de préférence répartis équi-angulairement autour de l'axe X. De préférence, leur nombre est égal à deux. Leur nombre peut être inférieur à quatre. Tous les corps pendulaires 13 peuvent se succéder circonférentiellement. Le dispositif 10 peut ainsi comprendre une pluralité de plans perpendiculaires à l'axe X de rotation dans chacun desquels tous les corps pendulaires 13 sont disposés.

Le dispositif 10 comprend en outre un système d'amortissement de butée 50. Le dispositif 10 peut comprendre un unique système d'amortissement de butée 50. Le système d'amortissement de butée 50 peut être réalisé dans un matériau élastique. Le matériau élastique peut être un élastomère ou du caoutchouc. Les propriétés élastiques présentées par le système d'amortissement de butée 50 peuvent permettre l'amortissement des chocs liés à la venue en contact du corps pendulaire 13 et du support 12.

Une même pièce, à savoir le système d'amortissement de butée 50 précité, peut alors amortir toutes les positions de venue en butée contre le support 12 du corps pendulaire 13. Le système d'amortissement de butée 50 peut comprendre un corps 51 et être disposé radialement sous l'un des éléments constituant le corps pendulaire 13. Le corps 51 peut s'étendre circonférentiellement entre une première extrémité circonférentielle 52 et une deuxième extrémité circonférentielle 53. Le corps 51 peut s'étendre radialement entre un bord supérieur 54 et un bord inférieur 55. Le bord supérieur 54 peut être à une distance supérieure ou égale à 2 millimètres, et de préférence comprise entre 2 et 4 millimètres, du bord inférieur 55. Le bord inférieur 55 peut être adapté pour entrer en contact avec la partie radialement interne de la fenêtre 15. Le bord inférieur 55 et la partie radialement interne de la fenêtre 15 peuvent présenter un rayon de courbure identique à +/- 2%.

Le système d'amortissement de butée 50 est adapté pour amortir la venue en position de butée contre le support 12 du corps pendulaire 13 lors de la chute radiale et/ou de la saturation de ce dernier dudit corps pendulaire 13. Le système d'amortissement de butée 50 peut être en outre adapté pour amortir la venue en position de butée contre le support 12 du corps pendulaire 13 lorsque ce dernier se déplace depuis la position de repos dans le sens trigonométrique et pour amortir la venue en position de butée contre le support 12 du corps pendulaire 13 lorsque ce dernier se déplace depuis la position de repos dans le sens non-trigonométrique.

Le système d'amortissement du butée 50, et plus particulièrement le corps 51 du système d'amortissement de butée 20, peut comprendre au moins une ouverture 56. L'ouverture 56 peut être traversante radialement. L'ouverture 56 peut présenter une forme de parallélogramme quelconque. Alternativement, l'ouverture 56 peut présenter une forme circulaire. Les bords de l'ouverture 56 sont formés, au moins partiellement, par le corps 51 du système d'amortissement de butée 50. Les bords de l'ouverture 56 peuvent être formés intégralement par le corps 51 du système d'amortissement de butée 50.

L'ouverture 56 peut être unique. L'ouverture 56 unique peut être située circonférentiellement à égale distance de la première extrémité circonférentielle 52 et de la deuxième extrémité circonférentielle 53 du système d'amortissement de butée 50. Alternativement, le système d'amortissement de butée 50 peut comprendre deux ouvertures 56. Chacune des deux ouvertures 56 peut être située à une distance égale non nulle d'une des extrémités circonférentielles dudit système d'amortissement de butée 50. Alternativement, les deux ouvertures 56 peuvent chacune être située sur la première extrémité circonférentielle 52 ou sur la deuxième extrémité circonférentielle 53 du système d'amortissement de butée 50. C'est-à-dire que la première extrémité circonférentielle 52 et la deuxième extrémité circonférentielle 53 du système d'amortissement de butée 50 peut former l'un des bords de l'une des ouvertures 56. Chacune des deux ouvertures 56 peut être circonférentiellement débouchante.

Alternativement, le système d'amortissement de butée 50 peut comprendre trois ouvertures 56. Le système d'amortissement de butée 50 peut comprendre une ouverture 56 centrale et deux ouvertures 56 latérales. Les trois ouvertures peuvent être à égale distance les une des autres.

Le système d'amortissement de butée 50 peut être rigidement solidaire de l'organe de liaison 20. Le système d'amortissement de butée 50 peut être directement rigidement solidaire de l'organe de liaison 20. Alternativement, le système d'amortissement de butée 50 peut être rigidement solidaire de l'organe de liaison 20 par l'intermédiaire d'un tierce élément. Plus particulièrement, chaque système d'amortissement de butée 50 peut être rigidement solidaire d'un unique organe de liaison ou entretoise 20. Chaque système d'amortissement de butée 50 peut être rigidement solidaire de la face inférieure 22 d'un unique organe de liaison ou entretoise 20.

Alternativement, le système d'amortissement de butée 50 peut être rigidement solidaire d'une masse oscillante 14. Le système d'amortissement de butée 50 peut être directement rigidement solidaire d'une masse oscillante 14. Le système d'amortissement de butée 50 peut être rigidement solidaire d'une masse oscillante 14 par l'intermédiaire d'un tierce élément. Plus particulièrement, chaque système d'amortissement de butée 50 peut être rigidement solidaire d'une unique masse oscillante 14. Chaque système d'amortissement de butée 50 peut être rigidement solidaire du bord radialement intérieur 6i d'une unique masse oscillante 14.

Le système d'amortissement de butée 50 peut comprendre au moins une patte de fixation 57. L'au moins une patte de fixation 57 est adaptée pour solidariser rigidement le système d'amortissement de butée 50 à l'entretoise 20. Alternativement, l'au moins une patte de fixation 57 est adaptée pour solidariser rigidement le système d'amortissement de butée 50 à l'une des masses oscillantes 14. De préférence, le système d'amortissement de butée 50 peut comprendre une paire de pattes de fixation 57. De préférence, le système d'amortissement de butée 50 peut comprendre deux paire de pattes de fixation 57. Les pattes de fixation 57 d'une paire de pattes de fixation 57 sont opposées axialement deux à deux.

Lorsque le système d'amortissement de butée 50 comprend une paire de pattes de fixation 57, lesdites pattes de fixation 57 peuvent être symétriques entre elles par rapport à un plan perpendiculaire à l'axe de rotation X.

Lorsque le système d'amortissement de butée 50 comprend deux paires de pattes de fixation 57, les deux paires de pattes de fixation 57 sont symétriques entre elles par rapport à un plan parallèle à l'axe de rotation et chacune des pattes de fixation 57 d'une paire est symétrique à l'autre des pattes de fixation 57 d'une même paire par rapport à un plan perpendiculaire à l'axe de rotation X.

Ces symétries orthogonales par rapport à un plan permettent de conserver les distances et les angles.

Chaque patte de fixation 57 peut comprendre un corps qui s'étend radialement entre une première extrémité et une deuxième extrémité libre. La première extrémité est rigidement solidaire du corps 51 du système d'amortissement de butée 50. La patte de fixation 57 s'étend radialement dans le jeu axial présent entre l'une des masses oscillantes 14 et l'entretoise 20.

La deuxième extrémité peut comprendre un crochet 58. Le crochet 58 s'étend perpendiculairement à la patte de fixation 57. Le crochet 58 peut s'étendre en regard de l'une des masses oscillante 14. Le crochet 58 est adapté pour s'enficher dans un trou 59 ménagé dans l'épaisseur de la masse oscillante 14. Alternativement, le crochet 58 peut s'étendre en regard de l'entretoise 20. Le crochet 58 est adapté pour s'enficher dans un trou 59 ménagé dans l'épaisseur de l'entretoise 20. Le trou 59 peut être traversant. C'est-à-dire que les crochets 58 de deux pattes de fixation 57 d'une paire de pattes de fixation 57 peuvent s'enficher dans un même trou 59. Alternativement, le trou 59 est borgne.

Le corps de chaque patte de fixation 57 peut présenter une forme parallélépipédique. En variante, le corps de chaque patte de fixation 57 peut présenter une forme de prisme triangulaire.

Alternativement, chaque patte de fixation 57 peut comprendre au moins un bossage 60. La deuxième extrémité peut comprendre l'au moins un bossage 60. De préférence, chaque patte de fixation 57 peut comprendre un unique bossage 60. Le bossage 60 s'étend perpendiculairement à la patte de fixation 57. Le bossage 60 peut s'étendre en regard de l'une des masses oscillante 14. Alternativement, le bossage 60 peut s'étendre en regard de l'entretoise 20. Le bossage 60 est adapté pour maintenir la patte de fixation 57 entre une des masses oscillantes 14 et l'entretoise 20 par compression axiale.

Chaque patte de fixation 57 peut être circonférentiellement alignée avec l'au moins une ouverture 56. Alternativement, chaque patte de fixation 57 peut être circonférentiellement décalée par rapport à l'au moins une ouverture 56.

L'entretoise 20 ou la masse oscillante 14 peut comprendre au moins une excroissance 25. Ladite au moins une excroissance 25 s'étend radialement entre une première extrémité et une deuxième extrémité libre. Lorsque le système d'amortissement de butée 50 est porté par l'entretoise 20, la première extrémité de l'au moins une excroissance 25 est rigidement solidaire de l'entretoise 20. Plus particulièrement, la première extrémité est rigidement solidaire de la face inférieure 22 de l'entretoise 20. Lorsque le système d'amortissement de butée 50 est porté par une masse oscillante 14, la première extrémité de l'au moins une excroissance 25 est rigidement solidaire de la masse oscillante 14. Plus particulièrement, la première extrémité est rigidement solidaire du bord radialement intérieur 6i de la masse oscillante 14. L'au moins une excroissance 25 peut former un bossage. L'au moins une excroissance 25 est en métal. L'entretoise 20 ou la masse oscillante 14 peut comprendre une unique excroissance 25. De préférence, l'entretoise 20 ou la masse oscillante 14 peut comprendre autant d'excroissance 25 que le système d'amortissement de butée 50 comprend d'ouvertures 56.

Chaque excroissance 25 peut être adaptée pour passer, au moins partiellement, au travers d'une ouverture 56. Il existe une distance radiale non nulle entre la deuxième extrémité libre de l'excroissance et le bord inférieur 55 du corps 51 de système d'amortissement de butée 50 lorsque le corps pendulaire est en position de repos. Cette distance permet au système d'amortissement de butée 50 de se déformer en cas de chute radiale et/ou de saturation du corps pendulaire 13, afin d'absorber une partie des chocs, avant que la deuxième extrémité de l'excroissance 25 n'entre en contact avec le support 12. Ce contact métal contre métal différé permet de protéger le système d'amortissement de butée 50 d'une compression radiale excessive et de supprimer les risques de perte et/ou de coincement des organes de roulement 40.

Le corps pendulaire 13 peut en outre comprendre une plaque 70 métallique. La plaque 70 peut être rigidement solidaire de l'entretoise 20 ou de l'une des masses oscillantes 14. La plaque 70 peut être rivetée à l'entretoise 20 ou à l'une des masses oscillantes 14. Le système d'amortissement de butée 50 peut être surmoulé sur la plaque 70. Alternativement, le système d'amortissement de butée 50 peut être collé sur la plaque 70. Ainsi, le système d'amortissement de butée 50 peut être rendu rigidement solidaire de, ou porté par, ou maintenu en place sur, l'entretoise 20 ou de l'une des masses oscillantes 14 par l'intermédiaire de la plaque 70.

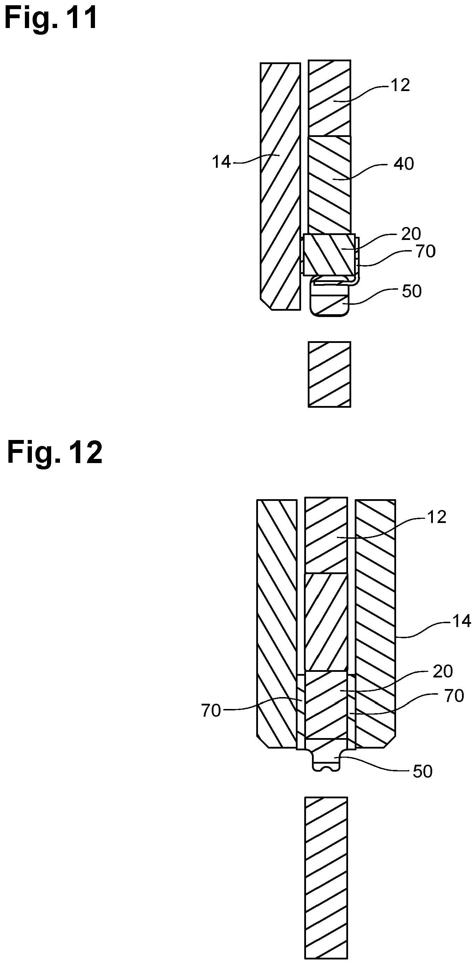

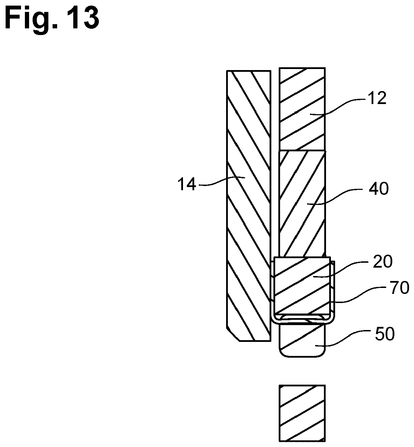

La plaque 70, comme représenté à la figure 11, peut présenter une forme en L. alternativement, et comme représenté à la figure 13, la plaque 70 peut présenter une forme en U. Le système d'amortissement de butée 50 peut être surmoulé sur la paroi radialement inférieure de la plaque 70. C'est-à-dire que le système d'amortissement de butée 50 peut être surmoulé sur la paroi de la plaque faisant radialement face à la face inférieure 22 de l'entretoise 20 lorsque la plaque 70 est portée par l'entretoise 20. Le système d'amortissement de butée 50 peut être surmoulé sur la paroi de la plaque 70 faisant radialement face au bord radialement intérieur 6i de l'une des masses oscillantes 14 lorsque la plaque 70 est portée par l'une desdites masses oscillantes 14.

Alternativement, la plaque 70, comme représenté à la figure 12 peut comprendre une double paroi, chacune étant située dans le jeu axial entre l'une des masses oscillantes 14 et l'entretoise 20. Le système d'amortissement de butée 50 peut être collé entre ces deux parois.

La première extrémité de la ou des excroissances 25 peut être rigidement solidaire de la plaque 70.

Bien entendu, l'invention n'est pas limitée aux variantes de réalisation particulières décrites ci-dessus. En particulier, des combinaisons des différentes alternatives de réalisation décrites ci-dessus sont possibles, dans la portée des revendications en annexe.

## Revendications

1. Dispositif (10) d'amortissement pendulaire destiné à être intégré dans une chaîne de transmission d'un véhicule automobile, notamment dans un embrayage, comprenant :
a. un support (20) mobile en rotation autour d'un axe de rotation (X),
b. un corps pendulaire (13) dont le déplacement par rapport au support est guidé par au moins un organe de roulement (40), et
c. un système d'amortissement de butée (50) directement porté par le corps pendulaire et permettant au moins d'amortir la venue en position de butée contre le support dudit corps pendulaire lors de la chute radiale et/ou de la saturation de ce dernier,
**Caractérisé en ce que** le corps pendulaire comprend au moins une excroissance (25) radiale adaptée pour passer au moins partiellement au travers une ouverture (56) pratiquée dans le système d'amortissement de butée.

2. Dispositif (10) selon la revendication 1, dans lequel l'excroissance s'étend radialement entre une première extrémité rigidement solidaire du corps pendulaire (13) et une deuxième extrémité libre, et dans lequel, lorsque le corps pendulaire est dans une position de repos, ladite extrémité libre est à une distance non nulle d'un bord inférieur (55) du système d'amortissement de butée (50).

3. Dispositif (10) selon la revendication précédente, dans lequel la distance entre la première extrémité et la deuxième extrémité libre de l'au moins une excroissance (25) radiale est prédéterminée de sorte que la distance radiale entre ladite deuxième extrémité libre et le support (12) soit toujours inférieure (12) au diamètre de l'au moins un organe de roulement (40).

4. Dispositif (10) selon l'une quelconque des revendications précédentes, dans lequel le corps pendulaire (13) comprend deux excroissances (25) radiales et le système d'amortissement de butée (50) comprend deux ouvertures (56), chacune des ouvertures étant optionnellement située à l'une des extrémités circonférentielles (52,53) dudit système d'amortissement de butée.

5. Dispositif (10) selon l'une quelconque des revendications précédentes, dans lequel le corps pendulaire (13) comprend deux masses oscillantes (14) appariées entre elles par au moins un organe de liaison (20), le système d'amortissement de butée (50) étant porté par l'au moins un organe de liaison ou par au moins une des masses oscillantes.

6. Dispositif (10) selon la revendication précédente, dans lequel le système d'amortissement de butée (50) comprend au moins une patte de fixation (57) s'étendant radialement dans un jeu axial ménagé entre au moins une des masses oscillantes (14) et l'au moins un organe de liaison (20).

7. Dispositif (10) selon la revendication précédente, dans lequel l'une des extrémités de l'au moins une patte de fixation (57) comprend un crochet (58), ledit crochet étant adapté pour s'enficher axialement dans un trou (59) ménagé dans l'une des masses oscillantes (14) ou dans l'au moins un organe de liaison (20).

8. Dispositif (10) selon la revendication 6 ou la revendication 7, dans lequel le système d'amortissement de butée (50) comprend au moins deux pattes de fixation (57), lesdites pattes de fixation étant symétriques entre elles par rapport à un plan perpendiculaire à l'axe de rotation (x).

9. Dispositif (10) selon la revendication 6, dans lequel l'au moins une patte de fixation (57) comprend un bossage (60) s'étendant radialement par rapport à ladite patte de fixation.

10. Dispositif selon l'une quelconque des revendications précédentes, dans lequel le corps pendulaire (13) comprend en outre une plaque (70) métallique, le système d'amortissement de butée (50) étant surmoulé ou collé à ladite plaque.

11. Composant pour système de transmission d'un véhicule automobile, le composant étant notamment un double volant amortisseur, un convertisseur de couple hydrodynamique, un volant solidaire du vilebrequin ou un disque de friction d'embrayage à sec ou humide, comprenant un dispositif (10) d'amortissement pendulaire selon l'une quelconque des revendications précédentes.

## Patentansprüche

1. Pendeldämpfungsvorrichtung (10), die dazu bestimmt ist, in eine Übertragungskette eines Kraftfahrzeugs, insbesondere in eine Kupplung, integriert zu sein, umfassend:
a. einen um eine Drehachse (X) drehbaren Träger (20),
b. einen Pendelkörper (13), dessen Bewegung in Bezug auf den Träger durch mindestens ein Rollorgan (40) geführt wird, und
c. ein Anschlagdämpfungssystem (50), das direkt durch den Pendelkörper getragen wird und es zumindest ermöglicht, bei einem radialen Fall und/oder der Sättigung des Pendelkörper das Anschlagen des Pendelkörpers gegen den Träger zu dämpfen,
**dadurch gekennzeichnet, dass** der Pendelkörper mindestens eine radiale Ausstülpung (25) umfasst, die dazu ausgelegt ist, zumindest teilweise durch eine im Anschlagdämpfungssystem vorgesehene Öffnung (56) zu verlaufen.

2. Vorrichtung (10) nach Anspruch 1, wobei sich die Ausstülpung radial zwischen einem ersten Ende, das mit dem Pendelkörper (13) fest starr verbunden ist, und einem zweiten freien Ende erstreckt, und wobei, wenn sich der Pendelkörper in einer Ruheposition befindet, sich das freie Ende in einem von Null verschiedenen Abstand zu einem unteren Rand (55) des Anschlagdämpfungssystems (50) befindet.

3. Vorrichtung (10) nach dem vorangehenden Anspruch, wobei der Abstand zwischen dem ersten Ende und dem zweiten freien Ende der mindestens einen radialen Ausstülpung (25) so vorbestimmt ist, dass der radiale Abstand zwischen dem zweiten freien Ende und dem Träger (12) stets kleiner als der Durchmesser des mindestens einen Rollorgans (40) ist.

4. Vorrichtung (10) nach einem der vorangehenden Ansprüche, wobei der Pendelkörper (13) zwei radiale Ausstülpungen (25) umfasst und das Anschlagdämpfungssystem (50) zwei Öffnungen (56) umfasst, wobei sich jede der Öffnungen optional an einem Umfangsenden (52, 53) des Anschlagdämpfungssystems befindet.

5. Vorrichtung (10) nach einem der vorangehenden Ansprüche, wobei der Pendelkörper (13) zwei Schwungmassen (14) umfasst, die über mindestens ein Verbindungsorgan (20) miteinander gepaart sind, wobei das Anschlagdämpfungssystem (50) von dem mindestens einen Verbindungsorgan oder von mindestens einer der Schwungmassen getragen wird.

6. Vorrichtung (10) nach dem vorangehenden Anspruch, wobei das Anschlagdämpfungssystem (50) mindestens eine Befestigungslasche (57) umfasst, die sich radial in einem axialen Spiel befindet, das zwischen mindestens einer der Schwungmassen (14) und dem mindestens einen Verbindungsorgan (20) vorgesehen ist.

7. Vorrichtung (10) nach dem vorangehenden Anspruch, wobei ein Ende der mindestens einen Befestigungslasche (57) einen Haken (58) umfasst, wobei der Haken dazu ausgelegt ist, axial in ein Loch (59) einzugreifen, das in einer der Schwungmassen (14) oder in dem mindestens einen Verbindungsorgan (20) vorgesehen ist.

8. Vorrichtung (10) nach Anspruch 6 oder Anspruch 7, wobei das Anschlagdämpfungssystem (50) mindestens zwei Befestigungslaschen (57) umfasst, wobei die Befestigungslaschen in Bezug auf eine zur Drehachse (X) senkrechte Ebene symmetrisch zueinander sind.

9. Vorrichtung (10) nach Anspruch 6, wobei die mindestens eine Befestigungslasche (57) eine Erhöhung (60) umfasst, die sich radial in Bezug auf die Befestigungslasche erstreckt.

10. Vorrichtung nach einem der vorangehenden Ansprüche, wobei der Pendelkörper (13) ferner eine Metallplatte (70) umfasst, wobei das Anschlagdämpfungssystem (50) auf die Platte aufgeformt oder geklebt ist.

11. Bauteil für ein Übertragungssystem eines Kraftfahrzeugs, wobei das Bauteil im Wesentlichen ein Zweimassen-Dämpfungsschwungrad, ein hydrodynamischer Drehmomentwandler, ein mit der Kurbelwelle fest verbundenes Schwungrad oder eine Reibscheibe einer Trocken- oder Nasskupplung ist, umfassend eine Pendeldämpfungsvorrichtung (10) nach einem der vorangehenden Ansprüche.

## Claims

1. A pendulum damping device (10) intended to be incorporated into a drive train of a motor vehicle, notably into a clutch, comprising:
a. a support (20) capable of rotational movement about an axis of rotation (X),
b. a pendulum assembly (13) of which the movement with respect to the support is guided by at least one rolling member (40), and
c. an end-stop damping system (50) borne directly by the pendulum assembly and able at least to damp the coming of said pendulum assembly into a position of abutment against the support of said pendulum assembly during the radial fall and/or saturation of this said pendulum assembly,
**characterized in that** the pendulum assembly comprises at least one radial protuberance (25) designed to pass at least partially through an opening (56) made in the end-stop damping system.

2. The device (10) as claimed in claim 1, wherein the protuberance extends radially between a first end rigidly secured to the pendulum assembly (13) and a free second end, and wherein, when the pendulum assembly is in a position of rest, said free end is at a non-zero distance away from a lower edge (55) of the end-stop damping system (50).

3. The device (10) as claimed in the preceding claim, wherein the distance between the first end and the free second end of the at least one radial protrusion (25) is predetermined so that the radial distance between said free second end and the support (12) is always smaller (12) than the diameter of the at least one rolling member (40).

4. The device (10) as claimed in any one of the preceding claims, wherein the pendulum assembly (13) comprises two radial protrusions (25) and the end-stop damping system (50) comprises two openings (56), each one of the openings being optionally situated at one of the circumferential ends (52, 53) of said end-stop damping system.

5. The device (10) as claimed in any one of the preceding claims, wherein the pendulum assembly (13) comprises two oscillating masses (14) paired with one another by at least one connecting member (20), the end-stop damping system (50) being borne by the at least one connecting member or by at least one of the oscillating masses.

6. The device (10) as claimed in the preceding claim, wherein the end-stop damping system (50) comprises at least one fixing tab (57) extending radially into an axial clearance created between at least one of the oscillating masses (14) and the at least one connecting member (20).

7. The device (10) as claimed in the preceding claim, wherein one of the ends of the at least one fixing tab (57) comprises a hook (58), said hook being designed to fit axially into a hole (59) created in one of the oscillating masses (14) or in the at least one connecting member (20).

8. The device (10) as claimed in claim 6 or claim 7, wherein the end-stop damping system (50) comprises at least two fixing tabs (57), said fixing tabs being mutually symmetrical with respect to a plane perpendicular to the axis of rotation (x).

9. The device (10) as claimed in claim 6, wherein the at least one fixing tab (57) comprises a boss (60) extending radially with respect to said fixing tab.

10. The device as claimed in any one of the preceding claims, wherein the pendulum assembly (13) further comprises a metal plate (70), the end-stop damping system (50) being overmolded on or bonded to said plate.

11. A component for a motor vehicle transmission system, the component notably being a dual-mass flywheel, a hydrodynamic torque converter, a flywheel secured to the crankshaft or a friction disk of a wet or dry clutch, comprising a pendulum damping device (10) as claimed in any one of the preceding claims.
